# EUROPÄISCHE PATENTSCHRIFT

(11) **EP 0 853 592 B1**
(45) Veröffentlichungstag und Bekanntmachung des Hinweises auf die Patenterteilung: **25.08.1999**
(21) Anmeldenummer: 97929251.3
(22) Anmeldetag: 21.06.1997
(51) Int. Cl.: C01B 21/04

(54) **VERFAHREN UND VORRICHTUNG ZUM ERZEUGEN VON STICKSTOFF AUS LUFT**
PROCESS AND DEVICE FOR PRODUCING NITROGEN FROM AIR
PROCEDE ET DISPOSITIF POUR PRODUIRE DE L'AZOTE A PARTIR DE L'AIR

(30) Priorität: 08.08.1996 DE 19631949
(43) Veröffentlichungstag der Anmeldung: 22.07.1998
(73) Patentinhaber: Druckluft Dannöhl GmbH, 46149 Oberhausen (DE)
(72) Erfinder: DANNÖHL, Peter, F., D-46149 Oberhausen (DE)
(74) Vertreter: Hosbach, Hans Ulrich, Dipl.-Ing.
(86) Internationale Anmeldenummer: EP9703263
(87) Internationale Veröffentlichungsnummer: WO9806664

(56) Entgegenhaltungen:
- EP-A- 0 705 791

## Beschreibung

Die Erfindung betrifft ein Verfahren und eine Vorrichtung zum Erzeugen von unter einem Solldruck stehendem Stickstoff, bei dem Luft in einer Vorverdichtungsstufe vorverdichtet, sodann gekühlt, gereinigt und wiedererwärmt wird, woraufhin in einer Separationsstufe eine Separation des Stickstoffs erfolgt und dieser in einer Endverdichtungsstufe auf den Solldruck endverdichtet wird.

Hauptanwendungsgebiet der Erfindung ist die Erzeugung von unter hohem Druck stehendem Stickstoff für Spritzgießmaschinen, bei denen der Stickstoff in die Spritzgießform eingeblasen wird, um Hohlkörper zu erzeugen. Derartige Systeme arbeiten mit Stickstoffrezirkulierung aus der Spritzgießform. Der Eingang der Endverdichtungsstufe liegt daher auf Atmosphärendruck.

Die DE 44 35 702 A1 beschreibt einen Teil eines derartigen Systems, und zwar die Erzeugung des Stickstoffs unter dem Vorverdichtungsdruck. Dieser beträgt, bedingt durch die Separationsstufe, größenordnungsmäßig 10 bis 12 bar. Nach der Entspannung auf Atmosphärendruck wird dann der Stickstoff in der nicht dargestellten Endverdichtungsstufe auf größenordnungsmäßig 320 bis 340 bar gebracht.

Der Erfindung liegt die Aufgabe zugrunde, die Stickstofferzeugung zu vereinfachen und den erforderlichen Leistungsbedarf wesentlich zu vermindern.

Zur Lösung dieser Aufgabe ist das eingangs genannte Verfahren dadurch gekennzeichnet, daß die Separationsstufe den Eingangsdruck für die Endverdichtungsstufe liefert, daß in der Anlaufphase der Aufbau des Eingangsdrucks der Endverdichtungsstufe durch partielle Rezirkulation des aus der Separationsstufe kommenden Gases zum Eingang der Vorverdichtungsstufe verzögert wird und daß die Endverdichtungsstufe erst zugeschaltet wird, wenn der Aufbau ihres Eingangsdrucks beendet ist.

Ein wesentlicher Anteil der Verdichtungsarbeit wird also dadurch eingespart, daß während des Dauerbetriebes die Druckerhöhung in der Endverdichtungsstufe nicht bei Atmosphärendruck beginnt, sondern beim Ausgangsdruck der Separationsstufe. Die beiden Verdichtungsstufen können optimal an die Erlangung des gewünschten Sauerstoffrestgehaltes angepaßt werden.

Die zeitversetzte Zuschaltung der Endverdichtungsstufe erleichtert deren Anlauf und vermeidet Stromspitzen. Außerdem ergibt sich durch die Zeitversetztung eine beträchtliche Energieersparnis.

Von wesentlicher Bedeutung ist, daß während der Anlaufphase vor Zuschaltung der Endverdichtungsstufe das von der Separationsstufe gelieferte Gas partiell zum Eingang der Vorverdichtungsstufe rezirkuliert wird. Dies führt dazu, daß sehr rasch der gewünschte Sauerstoffrestgehalt des Stickstoffs erreicht wird. Das rezirkulierende Gas ist bereits in der Separationsstufe gereinigt und erhöht dadurch den Stickstoffgehalt am Eingang der Vorverdichtungsstufe.

Eine weitere Steigerung des Wirkungsgrades läßt sich dadurch erzielen, daß der in der Endverdichtungsstufe durch innere Leckageverluste anfallende Stickstoff zum Eingang der Vorverdichtungsstufe rezierkuliert wird. Die Endverdichtungsstufe arbeitet also insoweit verlustfrei, wobei der rezirkulierte Stickstoff wiederum den Stickstoffgehalt der Luft am Eingang der Vorverdichtungsstufe erhöht.

Gleiches gilt für eine weiterhin vorgeschlagene Maßnahme, nämlich die Separation mehrstufig mit Gasrückführung zum Eingang der Vorverdichtungsstufe durchzuführen, da das zurückgeführte Gas bereits mit Stickstoff angereichert ist.

Die Vorteile der obigen Maßnahmen ergeben sich unabhängig davon, auf welche Weise die Luft gekühlt und wiedererwärmt sowie der Stickstoff separiert wird.

Allerdings ist es ganz besonders vorteilhaft, die bei der Verdichtung anfallende Wärme zum Wiedererwärmen der Luft zu nutzen, da auch dies zur Verringerung des Energiebedarfs beträgt.

Findet beispielsweise die Verdichtung unter Kühlung mit Öl statt, so kann das Öl seine Wärme an die Luft abgeben, bevor letztere der Separation zugeführt wird.

Alternativ oder zusätzlich dazu besteht in Weiterbildung der Erfindung die Möglichkeit, die bei der Kühlung der Luft anfallende Wärme zur Wiedererwärmung der Luft zu nutzen.

Die erfindungsgemäße Vorrichtung weist einen Luft-Vorverdichter, einen dem Vorverdichter nachgeschalteten Luftkühler, eine dem Luftkühler nachgeschaltete Reinigungseinrichtung, eine der Reinigungseinrichtung nachgeschaltete Heizeinrichtung, eine der Heizeinrichtung nachgeschaltete Stickstoff-Separationseinrichtung und einen der Separationseinrichtung nachgeschalteten Stickstoff-Endverdichter auf und ist zur Lösung der gestellten Aufgabe dadurch gekennzeichnet, daß der Endverdichter saugseitig an die Separationseinrichtung angeschlossen und über eine verschließbare Drossel mit der Ansaugseite des Vorverdichters verbunden ist und daß ein erster Druckschalter vorgesehen ist, der den Endverdichter in der Anlaufphase in Betrieb setzt, sobald der Vorverdichter den Eingangsdruck des Endverdichters aufgebaut hat.

Der Endverdichter ist also direkt an die Separationseinrichtung angeschlossen und wird erst in Betrieb genommen, wenn der Vorverdichter den für die Separationseinrichtung erforderlichen Druck aufgebaut hat. Dabei wird dieser Druckaufbau durch partielle Rezirkulation des von der Separationserichtung gelieferten Gases verzögert. Während dieser Phase stellt sich sehr rasch der gewünschte Sauerstoffrestgehalt des Stickstoffs ein.

Sobald sich der Endverdichter zuschaltet, wird die Drossel geschlossen und damit die Rezirkulation unterbrochen. Als verschließbare Drossel verwendet man vorzugsweise das ohnehin vorhandene Kondensatventil des Endverdichters.

Ferner ist es vorteilhaft, den Endverdichter über eine Leckagegasleitung mit der Ansaugseite des Vorverdichters zu verbinden, um dadurch den unvermeidbarerweise anfallenden Leckage-Stickstoff in den Prozeß zurückzuführen.

In Weiterbildung der Erfindung wird vorgeschlagen, daß die Separationseinrichtung mindestens zwei Membranseparatoren aufweist und daß der Konzentratauslaß mindestens eines der nachgeschalteten Membranseparatoren, vorzugsweise der Konzentratauslaß des letzten Membranseparators, über eine Gasrückführungsleitung mit der Ansaugseite des Vorverdichters verbunden ist. Das rückgeführte Konzentrat ist bereits mit Stickstoff angereichert und erhöht den Stickstoffgehalt der Ansaugluft des Vorverdichters, woraus ebenfalls eine Wirkungsgradsteigerung resultiert.

Vorzugsweise ist die Heizeinrichtung als Wärmetauscher ausgebildet, der mit seiner Wärme abgebenden Seite dem Vorverdichter nachgeschaltet ist. Die im Vorverdichter naturgemäß erwärmte Luft dient also zum Wiedererwärmen der Luft vor Eintritt in die Separationseinrichtung. Der Wärmetauscher sorgt gleichzeitig für die Kühlung der aus dem Vorverdichter austretenden Luft. Unter Umständen reicht diese Kühlung bereits aus, um die anschließende Reinigung der Luft, vorzugsweise in einem Kondensatabscheider, durchzuführen. Andernfalls kann der Reinigungseinrichtung eine zusätzliche Kühleinrichtung vorgeschaltet werden.

Ferner ist es vorteilhaft, daß dem Endverdichter ein Speicherbehälter nachgeschaltet und diesem ein zweiter Druckschalter zugeordnet ist, der den Vorverdichter und den Endverdichter abschaltet, wenn der Solldruck im Speicherbehälter erreicht ist, und der die Anlage wieder in Betrieb setzt, wenn ein vorgegebener Druck im Speicherbehälter unterschritten wird. Die Anlage arbeitet also diskontinuierlich und stellt sich dabei selbstätig auf den jeweiligen Bedarf ein. Ist der Speicherbehälter ausreichend gefüllt, so wird die Anlage stillgesetzt. Wird später dann der vorgegebene Druck im Speicherbehälter unterschritten, so schaltet sich erst der Vorverdichter und anschließend dann, wie oben beschrieben, der Endverdichter ein.

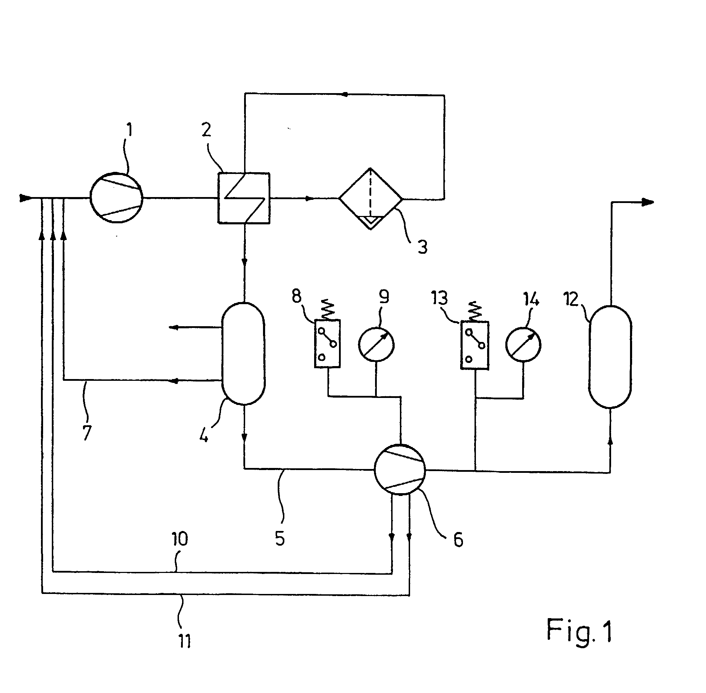

Die Erfindung wird im folgenden anhand eines bevorzugten Ausführungsbeispiels im Zusammenhang mit der beiliegenden Zeichnung nähert erläutert. Figur 1 zeigt ein Fließschema einer Vorrichtung zum Erzeugen von Stickstoff aus Luft.

Wie dargestellt, weist die Vorrichtung einen Vorverdichter 1 auf, dem ein Wärmetauscher 2 nachgeschaltet ist. Der Vorverdichter 1 saugt Luft an und komprimiert sie auf einen Zwischendruck, wobei sich die Luft erwärmt. Im Wärmetauscher 2 gibt die aufgeheizte Luft dann Wärme ab.

Dem Wärmetauscher 2 ist eine Reinigungseinrichtung 3 nachgeschaltet, die als Kondensatabscheider arbeitet und die gekühlte Luft von Kondensat, Aerosolen und Feststoffen befreit.

Anschließend wird die Luft durch den Wärmetauscher 2 geleitet, wo sie Wärme aufnimmt, die von der im Vorverdichter 1 aufgeheizten Luft abgegeben wird.

Die Verfahrensparameter sind so eingestellt, daß die Luft mit optimalem Druck und optimaler Temperatur in eine Separationseinrichtung 4 gelangt, die eine Mehrzahl von Membranseparatoren aufweist. Hier erfolgt eine mehrstufige Separation des Stickstoffs aus der Luft.

Der Stickstoff gelangt mit hohem Reinheitsgrad über eine Stickstoffleitung 5 zu einem Endverdichter 6, der den Stickstoff auf den Solldruck komprimiert.

Die Verdichtung wird also zweistufig durchgeführt, wobei der Vorverdichter 1 mit hoher Liefermenge und relativ geringer Druckerhöhung arbeitet, während der Endverdichter 6 die wesentlich geringere Stickstoffmenge auf den relativ hohen Solldruck bringt. Überschlägige Berechnungen haben ergeben, daß auf diese Weise eine Energieersparnis von ca. 25% erzielt wird, und zwar im Vergleich zu einem System, bei dem der Stickstoff von Atmosphärendruck auf den relativ hohen Solldruck komprimiert wird.

Zur weiteren Steigerung des Wirkungsgrades arbeitet die Separationseinrichtung 4 mit Gasrückführung. Hierzu ist sie über eine Gasrückführungsleitung 7 mit der Saugseite des Vorverdichters 1 verbunden. Die Gasrückführungsleitung 7 zweigt an der letzten Stufe der Separationseinrichtung, also an dem letzten Membranseparator ab und leitet dessen Konzentrat, also ein bereits mit Stickstoff angereichertes Gas, der Saugseite des Vorverdichters zu.

Beim Startvorgang arbeitet anfänglich nur der Vorverdichter 1. Erst wenn der Mindestdruck der Separationseinrichtung 4 erreicht ist, wird der Endverdichter 6 zugeschaltet, und zwar über einen ersten Druckschalter 8, der den Druck auf der Saugseite des Endverdichters 6 erfaßt. Ein zugeordnetes Manometer 9 zeigt diesen Druck an.

Der Endverdichter 6 ist über eine Leitung 10 mit der Saugseite des Vorverdichters 1 verbunden. Die Leitung 10 ist dabei an das nicht dargestellte Kondensatventil des Endverdichters 6 angeschlossen. Das Kondensatventil ist stromlos offen und wirkt während der Anlaufphase als Drossel für die Rezirkulation des von der Separationseinrichtung 4 gelieferten Gases. Der Druckaufbau vor dem Endverdichter wird dadurch verzögert. Wenn der Vorverdichter 1 den für die Separationseinrichtung 4 erforderlichen Betriebsdruck aufgebaut hat, ist auch der gewünschte Sauerstoffrestgehalt des Stickstoffs erreicht. Der Endverdichter 6 schaltet sich zu, wobei das Kondensatventil geschlossen und dadurch die Rezirkulation unterbrochen wird.

Ferner ist eine Leckagegasleitung 11 vorgesehen, die den unvermeidbarerweise im Endverdichter 6 anfallenden Leckage-Stickstoff der Ansaugseite des Vorverdichters 1 zuführt.

Dem Endverdichter 6 ist ein Speicherbehälter 12 nachgeschaltet, der den oder die Verbraucher versorgt. Dem Speicherbehälter 12 ist ein zweiter Druckschalter 13 zugeordnet, der das gesamte System stillsetzt, sobald im Speicherbehälter 12 der Solldruck erreicht ist. Auch dem zweiten Druckschalter 13 ist ein Manometer 14 zugeordnet.

Wird im Speicherbehälter 12 nach Stillsetzen des Systems ein vorgegebener Druck unterschritten, so sorgt der zweite Druckschalter 13 dafür, daß, wie oben beschrieben, erst der Vorverdichter 1 und sodann, im Zusammenwirken mit dem ersten Druckschalter 8, der Endverdichter 6 in Betrieb gesetzt wird.

Insgesamt ergibt sich ein System, das sehr einfach im Aufbau ist und energiesparend betrieben werden kann. Zu letzterem trägt auch der Wärmeübergang zwischen der aufgeheizten und der wiederzuerwärmenden Luft bei.

Im Rahmen der Erfindung sind durchaus Abwandlungsmöglichkeiten gegeben. So kann dem System eine Einrichtung zugeordnet werden, die den Reinheitsgrad des Stickstoffs einstellt. Ferner können die einstufig dargestellten Verdichter auch mehrstufig arbeiten. Die Anzahl der Stufen der Separationseinrichtung wird in Anpassung an die vorgegebenen Betriebsparameter gewählt, wobei auch mehrere Stufen parallel zueinander geschaltet werden können. Beim dargestellten Ausführungsbeispiel arbeitet der Wärmetauscher als Heizeinrichtung für die wiederzuerwärmende Luft und als Kühleinrichtung für die aus dem Vorverdichter kommende komprimierte Luft. Falls diese Kühlwirkung nicht ausreicht, kann der anschließenden Reinigungseinrichtung noch eine zusätzliche Kühleinrichtung vorgeschaltet werden. Gleichermaßen kann der Separationseinrichtung eine zusätzliche Heizeinrichtung vorgeschaltet werden.

## Patentansprüche

1. Verfahren zum Erzeugen von unter einem Solldruck stehendem Stickstoff, bei dem Luft in einer Vorverdichtungsstufe vorverdichtet, sodann gekühlt, gereinigt und wiedererwärmt wird, woraufhin in einer Separationstufe eine Separation des Stickstoffs erfolgt und dieser in einer Endverdichtungsstufe auf den Solldruck endverdichtet wird,
**dadurch gekennzeichnet,**
daß die Separationsstufe den Eingangsdruck für die Endverdichtungsstufe liefert, daß in der Anlaufphase der Aufbau des Eingangsdrucks der Endverdichtungsstufe durch partielle Rezirkulation des aus der Separationsstufe kommenden Gases zum Eingang der Vorverdichtungsstufe verzögert wird und daß die Endverdichtungsstufe erst zugeschaltet wird, wenn der Aufbau ihres Eingangsdrucks beendet ist.

2. Verfahren nach Anspruch 1, dadurch gekennzeichnet, daß der in der Endverdichtungsstufe durch innere Leckageverluste anfallende Stickstoff zum Eingang der Vorverdichtungsstufe rezirkuliert wird.

3. Verfahren nach Anspruch 1 oder 2, dadurch gekennzeichnet, daß die Separation mehrstufig mit Gasrückführung zum Eingang der Vorverdichtungsstufe durchgeführt wird.

4. Verfahren nach einem der Ansprüche 1 bis 3, dadurch gekennzeichnet, daß die bei der Vorverdichtung anfallende Wärme zum Wiedererwärmen der Luft genutzt wird.

5. Verfahren nach einem der Ansprüche 1 bis 4, dadurch gekennzeichnet, daß die bei der Kühlung der Luft anfallende Wärme zum Wiedererwärmen der Luft genutzt wird.

6. Vorrichtung zum Erzeugen von unter einem Solldruck stehendem Stickstoff, mit einem Luft-Vorverdichter, einem dem Vorverdichter nachgeschalteten Luftkühler, einer dem Luftkühler nachgeschalteten Reinigungseinrichtung, einer der Reinigungseinrichtung nachgeschalteten Heizeinrichtung, einer der Heizeinrichtung nachgeschalteten Stickstoff-Separationseinrichtung und einem der Separationseinrichtung nachgeschalteten Stickstoff-Endverdichter,
**dadurch gekennzeichnet,**
daß der Endverdichter (6) saugseitig an die Separationseinrichtung (4) angeschlossen und über eine verschließbare Drossel mit der Ansaugseite des Vorverdichters (1) verbunden ist und daß ein erster Druckschalter (8) vorgesehen ist, der den Endverdichter (6) in der Anlaufphase in Betrieb setzt, sobald der Vorverdichter (1) den Eingangsdruck des Endverdichters (6) aufgebaut hat.

7. Vorrichtung nach Anspruch 6, dadurch gekennzeichnet, daß als verschließbare Drossel das ohnehin vorhandene Kondensatventil des Endverdichters (6) verwendet wird.

8. Vorrichtung nach Anspruch 6 oder 7, dadurch gekennzeichnet, daß der Endverdichter (6) über eine Leckagegasleitung (11) mit der Ansaugseite des Vorverdichters (1) verbunden ist.

9. Vorrichtung nach einem der Ansprüche 6 bis 8, dadurch gekennzeichnet, daß die Separationseinrichtung (4) mindestens zwei Membranseparatoren aufweist und daß der Konzentratauslaß mindestens eines der nachgeschalteten Membranseparatoren, vorzugsweise der Konzentratauslaß des letzten Membranseparators, über eine Gasrückführungsleitung (7) mit der Ansaugseite des Vorverdichters (1) verbunden ist.

10. Vorrichtung nach einem der Ansprüche 6 bis 9, dadurch gekennzeichnet, daß die Heizeinrichtung als Wärmetauscher (2) ausgebildet ist, der mit seiner wärmeabgebenden Seite dem Vorverdichter (1) nachgeschaltet ist.

11. Vorrichtung nach einem der Ansprüche 6 bis 10, dadurch gekennzeichnet, daß dem Endverdichter (6) ein Speicherbehälter (12) nachgeschaltet und diesem ein zweiter Druckschalter (13) zugeordnet ist, der den Vorverdichter (1) und den Endverdichter (6) abschaltet, wenn der Solldruck im Speicherbehälter (12) erreicht ist, und der die Anlage wieder in Betrieb setzt, wenn ein vorgegebener Druck im Speicherbehälter (12) unterschritten wird.

## Claims

1. Method of producing nitrogen at a desired pressure in which air is precompressed in a precompression stage, then cooled, cleaned and reheated, whereafter the nitrogen is separated in a separation stage and is finally compressed to the desired pressure in a final compression stage, characterised in that the separation stage supplies the inlet pressure for the final compression stage, that in the start-up phase the build-up of the inlet pressure of the final compression stage is delayed by partial recirculation of the gas coming from the separation stage to the inlet of the precompression stage and that the final compression stage is only switched on when the build-up of its inlet pressure is completed.

2. Method as claimed in Claim 1, characterised in that the nitrogen accumulating in the final compression stage as a result of internal leakage losses is recirculated to the inlet of the precompression stage.

3. Method as claimed in Claim 1 or 2, characterised in that the separation is performed in a number of stages with the feedback of gas to the inlet of the precompression stage.

4. Method as claimed in one of Claims 1 to 3, characterised in that the heat produced in the precompression is used for reheating the air.

5. Method as claimed in one of Claims 1 to 4, characterised in that the heat produced in cooling the air is used for reheating the air.

6. Apparatus for producing nitrogen at a desired pressure including an air precompressor, an air cooler connected downstream of the precompressor, a cleaning device connected downstream of the air cooler, a heating device connected downstream of the cleaning device, a nitrogen separation device connected downstream of the heating device and a nitrogen final compressor connected downstream of the separation device, characterised in that the inlet of the final compressor (6) is connected to the separation device (4) and is connected to the inlet of the precompressor (1) by means of a closable throttle and that a first pressure switch (8) is provided which starts the final compressor (6) in the start-up phase as soon as the precompressor (1) has built up the inlet pressure of the final compressor (6).

7. Apparatus as claimed in Claim 6, characterised in that the condensate valve, which is in any event present, of the final compressor (6) is used as the closable throttle.

8. Apparatus as claimed in Claim 6 or 7, characterised in that the final compressor (6) is connected to the inlet side of the precompressor (1) via a leakage gas line (11).

9. Apparatus as claimed in one of Claims 6 to 8, characterised in that the separation device (4) has at least two membrane separators and that the concentrate outlet of at least one of the downstream separators, preferably the concentrate outlet of the last membrane separator, is connected to the inlet side of the precompressor (1) via a return line (7).

10. Apparatus as claimed in one of Claims 6 to 9, characterised in that the heating device is constructed as a heat exchanger (2), the heat-releasing side of which is connected downstream of the precompressor (1).

11. Apparatus as claimed in one of Claims 6 to 10, characterised in that connected downstream of the final compressor (6) there is a storage container (12) and a second pressure switch (13) is associated with it which switches off the precompressor (1) and the final compressor (6) when the desired pressure has been reached in the storage container (12) and which switches the installation on again when the pressure in the storage container (12) falls below a predetermined value.

## Revendications

1. Procédé de production d'azote sous une pression prescrite, dans lequel de l'air est précomprimé dans un étage de précompression, puis refroidi, purifié et réchauffé, après quoi, dans un étage de séparation a lieu une séparation de l'azote et celui-ci est soumis à compression finale à la pression prescrite dans un étage de compression finale, caractérisé par le fait
que l'étage de séparation fournit la pression d'entrée pour l'étage de compression finale, que, dans la phase de démarrage, l'établissement de la pression d'entrée de l'étage de compression finale est retardé par renvoi partiel du gaz venant de l'étage de séparation à l'entrée de l'étage de précompression, et que l'étage de compression finale n'est mis en circuit que lorsque l'établissement de sa pression d'entrée est terminé.

2. Procédé selon la revendication 1, caractérisé par le fait que l'azote produit dans l'étage de compression finale par des fuites internes est renvoyé à l'entrée de l'étage de précompression.

3. Procédé selon l'une des revendications 1 et 2, caractérisé par le fait que la séparation est effectuée en plusieurs étapes avec renvoi de gaz à l'entrée de l'étage de précompression.

4. Procédé selon l'une des revendications 1 à 3, caractérisé par le fait que la chaleur produite lors de la précompression est utilisée pour le réchauffage de l'air.

5. Procédé selon l'une des revendications 1 à 4, caractérisé par le fait que la chaleur produite lors du refroidissement de l'air est utilisée pour le réchauffage de l'air.

6. Appareil pour la production d'azote sous une pression prescrite, comportant un précompresseur d'air, un refroidisseur d'air placé après ce précompresseur, un dispositif de purification placé après ce refroidisseur d'air, un dispositif de chauffage placé après ce dispositif de purification, un dispositif de séparation d'azote placé après ce dispositif de chauffage et un compresseur final d'azote placé après ce dispositif de séparation,
caractérisé par le fait
que le compresseur final (6) est relié du côté aspiration au dispositif de séparation (4) et relié par l'intermédiaire d'un étranglement obturable au côté aspiration du précompresseur (1), et qu'il est prévu un premier manostat (8) qui met le compresseur final (6) en marche dans la phase de démarrage dès que le précompresseur (1) a établi la pression d'entrée du compresseur final (6).

7. Appareil selon la revendication 6, caractérisé par le fait que comme étranglement obturable est utilisée la soupape de condensat existante du compresseur final (6).

8. Appareil selon l'une des revendications 6 et 7, caractérisé par le fait que le compresseur final (6) est relié par une conduite de gaz de fuite (11) au côté aspiration du précompresseur (1).

9. Appareil selon l'une des revendications 6 à 8, caractérisé par le fait que le dispositif de séparation (4) présente au moins deux séparateurs à membrane et que la sortie de concentrat d'au moins un des séparateurs à membrane placés en aval, de préférence la sortie de concentrat du dernier séparateur à membrane, est reliée par une conduite de retour de gaz (7) au côté aspiration du précompresseur (1).

10. Appareil selon l'une des revendications 6 à 9, caractérisé par le fait que le dispositif de chauffage est constitué d'un échangeur de chaleur (2) dont le côté qui cède de la chaleur est placé après le précompresseur (1).

11. Appareil selon l'une des revendications 6 à 10, caractérisé par le fait qu'après le compresseur final (6) est placé un réservoir (12) et à celui-ci est associé un deuxième manostat (13) qui arrête le précompresseur (1) et le compresseur final (6) lorsque la pression prescrite est atteinte dans le réservoir (12), et remet l'installation en marche lorsque la pression dans le réservoir (12) descend au-dessous d'une valeur fixée.
